# EUROPEAN PATENT SPECIFICATION

(11) **EP 2 809 038 B1**
(45) Date of publication and mention of the grant of the patent: **02.03.2016**
(21) Application number: 14168443.1
(22) Date of filing: 15.05.2014
(51) Int. Cl.: H04L 12/801, H04L 12/825, H04L 12/851

(54) **Communication controller, method of controlling communications and communication control program**
Kommunikationssteuerung, Verfahren zur Steuerung von Kommunikation und Kommunikationssteuerungsprogramm
Contrôleur de communication, procédé et programme de commande de communication

(30) Priority: 30.05.2013 JP 2013113856
(43) Date of publication of application: 03.12.2014
(73) Proprietor: FUJITSU LIMITED, Kawasaki-shi, Kanagawa 211-8588 (JP)
(72) Inventor: Umezuki, Takeshi, Kanagawa, 211-8588 (JP)
(74) Representative: Hoffmann Eitle

(56) References cited:
- US-A1- 2011 242 976
- US-A1- 2011 261 696
- US-A1- 2011 261 697

## Description

### FIELD

The present disclosure is directed to a communication controller, an information processing apparatus, a storage apparatus, a method of controlling communications, and a communication control program.

### BACKGROUND

An Ethernet™ network (NW) is a network that is able to communicate general local area network (LAN) traffics, such as Internet Small Computer System Interface (iSCSI) and Network File System (NFS) traffics.

An increasing number of storage devices support iSCSI recently.

LAN traffics allow for some packet losses, and when a packet loss is detected, a server retransmits the lost packet. In contrast, iSCSI is processed as a LAN traffic but does not tolerate any packet losses, and therefore, a storage may not be impossible. For this reason, there has been prepared an Ethernet network dedicated to storage completely separated from the enterprise Ethernet network system, so that the storage access is not affected by enterprise traffic.

A Data Center Bridging (DCB) network has appeared which is capable of dealing with both storage traffic, such as Fibre Channel over Ethernet (FCoE), iSCSI, and NFS, and LAN traffic.

Dealing with various kind of traffic, a DCB network needs a wide band and therefore achieves its communication on the 10GbE base.

In a DCB network, a single switch integrates a storage area network (SAN) and a LAN.

A DCB network carries out communication on the Ethernet basis, and only the FCoE supports the following two new protocols to avoid packet losses, which ensures the reliability as high as Fiber Channel (FC).

One protocol of priority-based flow control (PFC) allocates multiple logical transmitting and receiving queues to a single physical port and associates such a single physical port with service requests of multiple traffics. In PFC, each logical/physical port is called a "priority", and traffics for storage input/output (I/O) and LAN are each associated with a priority. PFC is standardized as IEEE802.1Qbb.

The other protocol of Enhanced Transmission Selection (ETS) associates the priorities defined in PFC with a priority group (PG), and defines a band allocated to each PG. ETS is standardized as IEEE802.1Qaz.

As described above, iSCSI is treated with LAN traffic. However, storage traffic, which does not premise the presence of packet loss, may not access storage when packet loss occurs.

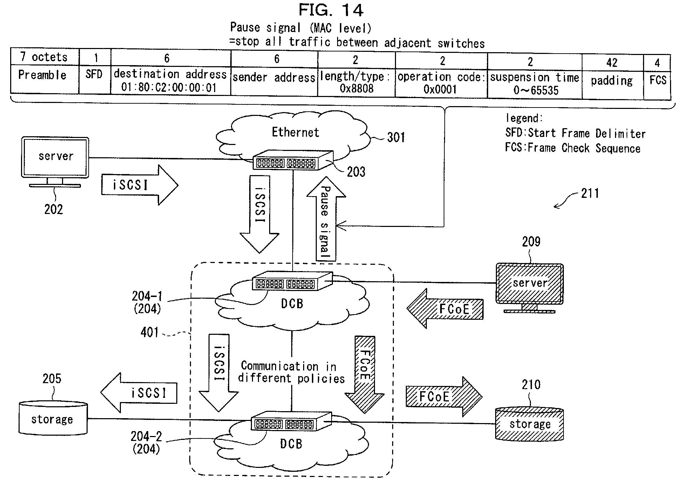

Accompanying drawing FIG. 14 is a schematic diagram illustrating the system configuration of a conventional information processing system 211.

The information processing system 211 includes an iSCSI server 202, an Ethernet switch (SW) 203, a DCB switches 204-1 and 204-2, an iSCSI storage 205, an FCoE server 209, and an FCoE storage 210.

The iSCSI server 202 is, for example, a computer having a server function and is compliant with iSCSI. The iSCSI server 202 writes and reads data into and from storage regions that the iSCSI storage 205 and the FCoE storage 210 provide by transmitting disk access commands for reading/writing to the iSCSI storage 205 and the FCoE storage 10, respectively.

The Ethernet SW 203 is a switch conforming to the Ethernet protocol and is connected to an Ethernet network 301. In the example in FIG. 14, the Ethernet switch 203 is connected to the iSCSI server 202 and the DCB switch 204-1.

The DCB switches 204-1 and 204-2 are switches conforming to the DCB protocol and are each capable of processing both iSCSI traffic and FCoE traffic. The DCB switches 204-1 and 204-2 are connected to a DCB network 401. In the example in FIG. 14, the DCB switch 204-1 is connected to the Ethernet switch 203, the DCB switch 204-2, and the FCoE server 209 while the DCB switch 204-2 is connected to the DCB switch 204-1, the ISCSI server 202, and the FCoE storage 210 to be detailed below.

The iSCSI storage 205 is a device compliant with iSCSI.

The FCoE server 209 is, for example, a computer having a server function and is compliant with FCoE. The FCoE server 209 writes and reads data into and from the storage regions that the iSCSI storage 205 and the FCoE storage 210 provide by transmitting disk access commands for reading/writing to the iSCSI storage 205 and the FCoE storage 210, respectively.

The FCoE storage 210 is a storage device compliant with FCoE.

As illustrated in FIG. 14, iSCSI traffic flows between the iSCSI server 202 and the Ethernet switch 203; between the Ethernet switch 203 and the DCB switch 204-1; between the DCB switches 204-1 and 204-2; and between the DCB switch 204-2 and the iSCSI storage 205.

In contrast, FCoE traffic flows between the ECoE server 209 and the DCB switch 204-1; between the DCB switches 204-1 and 204-2; and the between the DCB switch 204-2 and the FCoE storage 210.

The ISCSI traffic, passing through the DCB network 401, is treated as LAN traffic.

For this reason, QoS (Quality of Service) that the DCB applies to FCoE traffic is not applied to the iSCSI traffic and in the event of bandwidth overflow, the overflowing frames of iSCSI traffic are lost.

To escape from this inconvenience, a Pause signal having a format depicted on the upper portion in FIG. 14 is prepared as a command to control congestion in a device that is not compliant with the DCB. A Pause signal causes an adjacent device to halt all traffic of a target physical port.

In the event of occurrence of congestion, it is possible to stop all the congested ports by issuing this Pause signal.

Unfortunately, a Pause signal, which stops the entire traffic of the physical ports to be stopped, blocks also the other traffic as well as iSCSI traffic.

As a result of using a Pause signal, the buffer overflows with traffic that is going to flow into congested physical ports, which may cause packet loss. Since applications for Ethernet environment premise the presence of packet loss, the iSCSI server 202 retransmits, upon detection of a packet lost, the lost packet.

At that time, the iSCSI server 202 retransmits the lost packet at a lowered transfer rate so that congestion will not occur again. This degrades the throughput of the entire system.

The following further prior art documents disclose further technological background art with regard to congestions in network systems:
- D1: US 2011/261696 A1 (CRISAN DANIEL [CH] ET AL) 27 October 2011 (2011-10-27)
- D2: US 2011/261697 A1 (CRISAN DANIEL [CH] ET AL) 27 October 2011 (2011-10-27)
- D3: US 2011/242976 A1 (GUSAT MIRCEA [CH ET AL)] 6 October 2011 (2011-10-06

D1 and D2 suggest that congestion notification and collection messages are exchanged between the network controller and individual network nodes. In case of congestion, the traffic rate can be adapted. D1 and D2 relates to a network systems in which a DCB kind of traffic as well as a FCoE traffic is routed through the individual network nodes.

D3 discloses a switch fabric which has switchable routing paths between the individual network nodes. Congestion can be monitored and the data rate can be adjusted. However, D3 relates to such a communication network in which only the TCP/IP kind of traffic is monitored.

### SUMMARY

It is an object of the present disclosure to avoid frame loss of ISCSI packets in a DCB network.

Accordingly, a communication controller controls communications in a network according to claim 1.

Still further, a method of controlling communications in a network according to claim 5.

Still further, a communication control program causes a computer to execute a process for controlling communications in a network according to claim 9.

### BRIEF DESCRIPTION OF DRAWINGS

FIG. 1 is a schematic diagram illustrating the system configuration of an information processing system according to a first embodiment;
FIG. 2 is a schematic diagram illustrating an exemplary format of an L3 Pause signal used in an information processing system as an example of an embodiment;
FIG. 3A is a schematic diagram illustrating an exemplary format of an L3 Pause permission request used in an information processing system as an example of an embodiment;
FIG. 3B is a schematic diagram illustrating an exemplary format of an L3 Pause permission response used in an information processing system as an example of an embodiment;
FIG. 4A is a schematic diagram illustrating an exemplary format of an adjacent device check request used in an information processing system as an example of an embodiment;
FIG. 4B is a schematic diagram illustrating an exemplary format of an adjacent device check response;
FIG. 5 is a schematic diagram illustrating a system configuration of an information processing system In accordance with an example of an embodiment;
FIG. 6 is a schematic diagram illustrating a functional configuration of a congestion controller as an example of an embodiment;
FIG. 7 is a diagram illustrating an exemplary configuration of a traffic management database as an example of an embodiment;
FIG. 8 is a flow diagram denoting a succession of procedural steps performed in an information processing system as an example of an embodiment;
FIG. 9 is a flow diagram denoting a succession of detailed procedural steps performed in an information processing system as an example of an embodiment;
FIG. 10 is a flow diagram denoting a succession of detailed procedural steps performed in an information processing system as an example of an embodiment;
FIG. 11 is a flow diagram denoting a succession of detailed procedural steps performed in an information processing system as an example of an embodiment;
FIG. 12 is a flow diagram denoting a succession of detailed procedural steps performed in an information processing system as an example of an embodiment;
FIG. 13 is a schematic diagram illustrating the system configuration of an information processing system according to a modification to an embodiment; and
FIG. 14 is a schematic diagram illustrating the system configuration of a conventional information processing system.

### DESCRIPTION OF EMBODIMENTS

Hereinafter, an embodiment will now be described with reference to the drawings.

### (A) Configuration:

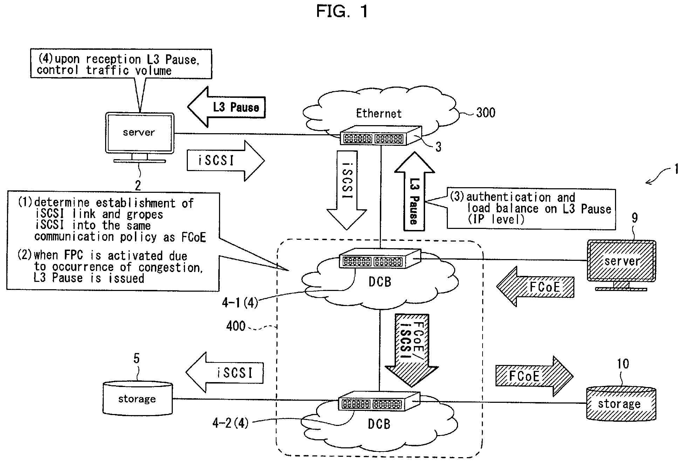

First, the configuration of an information processing system 1 an example of an embodiment will be described with reference to FIGS. 1-5.

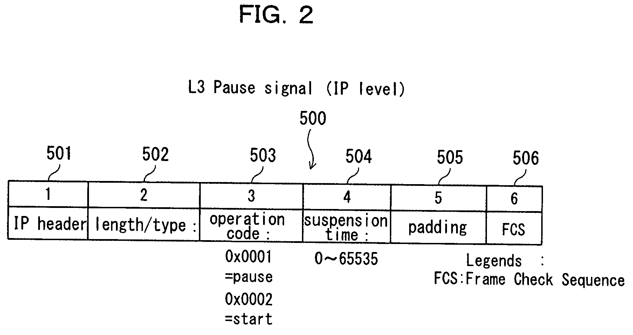

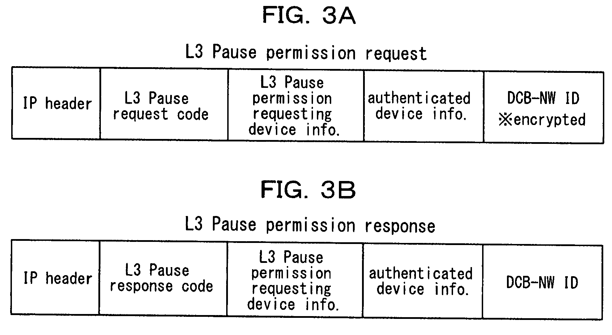

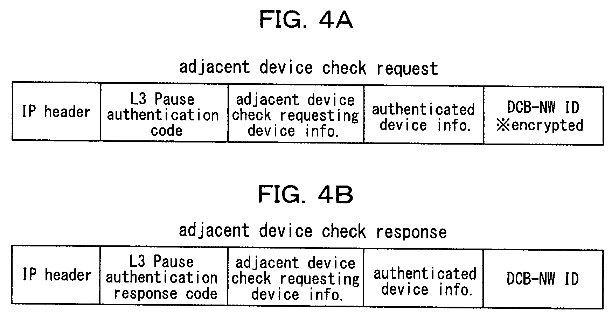

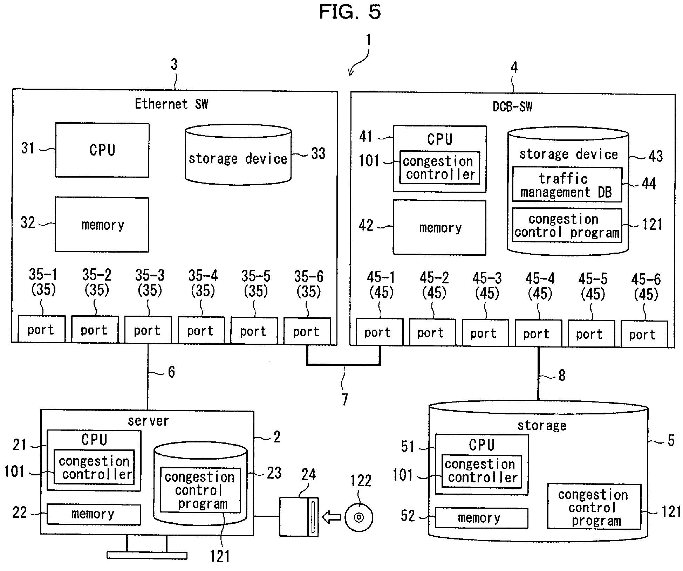

FIGS. 1 and 5 are schematic diagrams illustrating the system configuration of an information processing system 1 In accordance with an example of an embodiment. FIGS. 2-4 are schematic diagrams depicting examples of the formats of signals related to Layer 3 (L3) Pause used in the information processing system as an example of an embodiment. In detail, FIG. 2 is a schematic diagram illustrating an exemplary format of an L3 Pause signal; FIG. 3A is a schematic diagram illustrating an exemplary format of an L3 Pause permission request used in the information processing system as an example of an embodiment; FIG. 3B is a schematic diagram illustrating an exemplary format of an L3 Pause permission response used in the information processing system as an example of an embodiment; FIG. 4A is a schematic diagram illustrating an exemplary format of an adjacent device check request used in the information processing system as an example of an embodiment; and FIG. 4B is a schematic diagram illustrating an exemplary format of an adjacent device check response.

The information processing system 1 includes an iSCSI server (information processing apparatus) 2, an Ethernet switch 3, DCB switches 4-2 and 4-2, an iSCSI storage (storage apparatus) 5, an FCoE server 9, and an FCoE storage 10.

The iSCSI server 2 is, for example, a computer having a server function and is compliant with iSCSI. The iSCSI server 2 writes and reads data into and from storage regions that the iSCSI storage 5 and the FCoE storage 10 provide by transmitting disk access commands for reading/writing to the iSCSI storage 5 and the FCoE storage 10, respectively.

The Ethernet SW 3 is a switch conforming to the Ethernet protocol and is connected to an Ethernet network 300. In the example in FIG. 1, the Ethernet switch 3 is connected to the ISCSI server 2 and the DCB switch 4-1.

The DCB switches 4-1 and 4-2 are switches conforming to the DCB protocol and are each capable of processing both iSCSI traffic and FCoE traffic. The DCB switches 4-1 and 4-2 are connected to a DCB network 400. In the example in FIG. 1, the DCB switch 4-1 is connected to the Ethernet switch 3, the DCB switch 4-2, and the FCoE server 9 while the DCB switch 4-2 is connected to the DCB switch 4-1, the iSCSI server 2, and the FCoE storage 10 that is to be described below.

The DCB switches 4-1 and 4-2 form a single DCB switch group as to be detailed below.

Hereinafter, one of the multiple DCB switches is specified by the reference symbol 4-1 or 4-2; and an arbitrary DCB switch is represented by the reference symbol 4.

The iSCSI storage 5 is a storage device compliant with iSCSI.

The FCoE server 9 is, for example, a computer having a server function and is compliant with FCoE. The FCoE server 9 writes and reads data into and from the storage regions that the ISCSI storage 5 and the FCoE storage 10 provide by transmitting disk access commands for reading/writing to the ISCSI storage 5 and the FCoE storage 10, respectively.

The FCoE storage 10 is a storage device compliant with FCoE.

Hereinafter, the iSCSI server 2 and the iSCSI storage 5 are collectively referred to as iSCSI devices 2 and 5.

Likewise, the ECoE server 9 and the FCoE storage 10 are collectively referred to as FCoE devices 9 and 10.

As illustrated in FIG. 1, iSCSI traffic flows between the ISCSI server 2 and the Ethernet switch 3; between the Ethernet switch 3 and the DCB switch 4-1; between the DCB switches 4-1 and 4-2; and between the DCB switch 4-2 and the ISCSI storage 5.

In contrast, FCoE traffic flows between the ECoE server 9 and the DCB switch 4-1; between the DCB switches 4-1 and 4-2; and the between the DCB switch 4-2 and the FCoE storage 10.

The information processing system 1 treats the FCoE traffic and the iSCSI traffic as storage traffic with a single band controlling policy, so that the communication policy for storage traffic in the DCB network 400 can be unified.

For the above, in the information processing system 1, establishment of the ISCSI link (ISCSI Login negotiation) is determined and ISCSI is grouped into the same communication policy as the FCoE. During this grouping, the authentication process that is to be detailed below is carried out to ensure the security.

In the event of network congestion, which activates PFC, the information processing system 1 uses a frame called an L3 Pause signal (hereinafter also referred to as L3 Pause) to control the iSCSI traffic volume to eliminate the congestion.

FIG. 2 depicts an exemplary format 500 of an L3 Pause signal.

For example, an L3 Pause signal includes an operation code 503 and a suspension time 504.

The operation code 503 is a code representing an operation instructed by an L3 Pause signal. For example, the operation code 503 takes a value 0×0001 representing "pause" that suspends transmission of the traffic and a value 0×0002 representing "start" that starts transmission of the traffic.

The suspension time 504 designates a time for which the traffic is to be suspended as a value in, for example, a unit of millisecond (ms) in the range of 0-65535. When the operational code is set to be "start", the suspension time is set to be "0 ms", for example. The suspension time can be calculated by various manners known to public, such as via ETS/FPC, so detailed description of the calculation is omitted here.

Since a Pause signal on the MAC level denoted in FIG. 14 is transmitted only to an adjacent device, a delay time is not considered. On the contrary, an L3 Pause signal is transmitted to as far as the device of the sender device of the iSCSI traffic, which causes occurrence of congestion. For this reason, contemplating the presence of a remote device, the suspension time to be set for an L3 Pause signal additionally considers a delay time to reach such a remote device.

To avoid congestion intensively affecting a particular device, the suspension time that the L3 Pause designates each device that is to be suspended is adjusted on the basis of the traffic flow volume and/or the delay time, so that the congestion is distributed (i.e., load balancing).

Furthermore, in order to prevent a device out of a communication path from invalidly transmitting an L3 Pause signal to interfere with the communication, an authentication process is carried out to guarantee that the device that has issued the L3 Pause signal is a device on the communication path.

In the example in FIG. 1, (1) first, the iSCSI server 2 transmits a log-in request to the ISCSI storage 5, and then the iSCSI storage 5 replies to the iSCSI server 2 with a log-in response. At that time, the DCB switch 4-1 determines establishment of an ISCSI link between the ISCSI server 2 and the ISCSI storage 5 and groups the ISCSI into the same communication policy as the FCoE.
(2) When the iSCSI traffic transmitted from the iSCSI server 2 overflows one of the physical ports of the DCB switch 4-1 to cause congestion, PFC is activated in the DCB switch 4-1. Then the DCB switch 4-1 transmits an L3 Pause signal to the iSCSI server 2.
(3) The DCB switch 4-1 transmits the L3 Pause signal to the Ethernet switch 3 via the Internet Protocol (IP), that is, on the L3 level, and the L3 Pause signal finally reaches the iSCSI server 2 through the Ethernet switch 3.
(4) Upon receipt of the L3 Pause signal, the iSCSI server 2 controls an iSCSI traffic volume.

FIGS. 3A and 3B illustrate exemplary formats of an L3 Pause permission request and an L3 Pause permission response used in the information processing system 1 as an example of an embodiment, respectively.

An L3 Pause permission request depicted in FIG. 3A includes fields of an IP header, an L3 Pause request code, L3 Pause permission requesting device information, authenticated device information, and DCB-NW ID.

An IP header is attached to the message of the L3 Pause permission request. An IP header is known to the art, so description thereof is omitted here.

In the field of the L3 Pause request code, a value indicating that the message is an L3 Pause request is set.

In the field of the L3 Pause permission requesting device information, an identifier of the device requesting the L3 Pause permission request is set.

In the field of the authenticated device information, an identifier of the device to be authenticated is set.

In the field of the DCB-NW ID, a unique identifier of a DCB network 400 that has detected the congestion is set. As to be detailed below, the ID value is encrypted.

An L3 Pause permission response depicted in FIG. 3B includes fields of an IP header, an L3 Pause response code, L3 Pause permission requesting device information, authenticated device information, and DCB-NW ID.

An IP header is attached to the message of the L3 Pause permission response.

In the field of the L3 Pause response code, a value indicating that the message is an L3 Pause response is set.

In the field of the L3 Pause requesting device information an identifier of the device requesting the L3 Pause permission request is set.

In the field of authenticated device information, an identifier of the device to be authenticated is set.

In the field of the DCB-NW ID, a unique identifier of a DCB network 400 that has detected the congestion is set.

FIGS. 4A and 4B illustrate exemplary formats of an adjacent device check request and an adjacent device check response, respectively.

An adjacent device check request depicted in FIG. 4A includes fields of an IP header, an L3 Pause authentication code, adjacent device check requesting device information, authenticated device information, and DCB-NW ID.

An IP header is attached to the message of the adjacent device check request.

In the field of the L3 Pause authentication code, the value indicating that the message is an adjacent device check request is set.

In the field of the adjacent device check requesting device information, an identifier of the device requesting the adjacent device check request is set.

In the field of the authenticated device information, an identifier of the device to be authenticated is set.

In the field of the DCB-NW ID, a unique identifier of a DCB network 400 that has detected the congestion is set. As to be detailed below, the ID value is encrypted.

An adjacent device check response depicted in FIG. 4B includes fields of an IP header, an L3 Pause authentication response code, adjacent device check requesting device information, authenticated device information, and DCB-NW ID.

An IP header is attached to the message of the adjacent device check response.

In the field of the L3 Pause authentication response code, the value indicating that the message is an adjacent device check response is set.

In the field of the adjacent device check requesting device information, an identifier of the device requesting the adjacent device check request is set.

In the field of the authenticated device information, an identifier of the device to be authenticated is set.

In the field of the DCB-NW ID, a unique identifier of a DCB network 400 that has detected the congestion is set.

FIG. 5 is a schematic diagram illustrating the system configuration of the information processing system 1 as an example of an embodiment.

In the example in FIG. 5, only one DCB switch 4 appears. However, multiple cascaded DCB switches 4 (two stories in the example in FIG. 1) may be arranged as illustrated in FIG. 1 or a one-story DCB switch 4 may be arranged as illustrated in FIG. 5.

The iSCSI server 2 includes a Central Processing Unit (CPU) 21, a memory 22, a storage device 23, and a medium reader 24.

The CPU 21 is a processing device that carries out various controls and calculations, and achieves various function by executing programs stored in the storage device 23 and a read only memory (ROM) that are to be detailed below.

The memory 22 stores, for example, a program and various pieces of data that the CPU 21 is to execute and use, and data obtained in various processes performed by the CPU 21. Examples of the memory 22 include various existing memory devices such as a random access memory (RAM) and a ROM. The memory 22 may be a combination of memory devices in different types.

The storage device 23 serves as a memory region of the ISCSI server 2, and stores various programs such as an unillustrated operating system (OS) running on the iSCSI server 2 and a congestion control program 121 that is to be detailed below. Examples of the storage device 23 include a Hard Disk Drive (HDD) and a Solid State Drive (SSD).

The medium reader 24 is a drive that reads and writes data from and to a recording medium 122 such as a CD (e.g., CD-ROM, CD-R, and CD-RW), a DVD (DVD-ROM, DVD-RAM, DVD-R, DVD+R, DVD-RW, and DVD+RW), and a Blu Ray. In FIG. 5, the medium reader 24 is illustrated as an external device, but may alternatively be incorporated in the iSCSI server 2.

The Ethernet switch 3 includes a CPU 31, a memory 32, a storage device 33, and physical ports 35-1 to 35-6.

The CPU 31 is a processing device that carries out various controls and calculations, and performs various processes by executing programs stored in the storage device 33 and an unillustrated ROM.

The memory 32 stores, for example, a program and various pieces of data that the CPU 31 is to execute and use, and data obtained in various processes performed by the CPU 31. Examples of the memory 32 include various existing memory devices such as a RAM and a ROM. The memory 32 may be a combination of memory devices in different types.

The storage device 33 serves as a memory region of the Ethernet switch 3, and stores various programs such as an unillustrated OS and various programs that the Ethernet switch 3 is executing. Examples of the storage device 33 include a HDD and an SSD.

The physical ports 35-1 to 35-6 are each physical port that connects devices that are connected to the Ethernet switch 3 with each other.

Hereinafter, one of the multiple physical ports is specified by one reference symbol among 35-1 to 35-6; and an arbitrary physical port is represented by the reference symbol 35.

The physical port 35-3 of the Ethernet switch 3 is connected to the iSCSI server 2 via a LAN cable 6.

The physical port 35-6 of the Ethernet switch 3 is connected to a physical port 45-1 of the DCB switch 4 via a LAN cable 7.

The DCB switch 4 includes a CPU 41, a memory 42, a storage device 43, and physical ports 45-1 to 45-6.

The CPU 41 is a processing device that carries out various controls and calculations, and performs various processes by executing programs stored in the storage device 43 and a ROM.

The memory 42 stores, for example, a program and various pieces of data that the CPU 41 is to execute and use, and data obtained in various processes performed by the CPU 41. Examples of the memory 42 include various existing memory devices such as a RAM and a ROM. The memory 42 may be a combination of memory devices in different types.

The storage device 43 serves as a memory region of the DCB switch 4, and stores various programs such as an unillustrated OS that the DCB switch 4 is executing and various programs, such as a congestion control program 121 that is to be detailed below, and further stores a traffic management database (DB) (storage unit) 44. Examples of the storage device 43 include a HDD and an SSD.

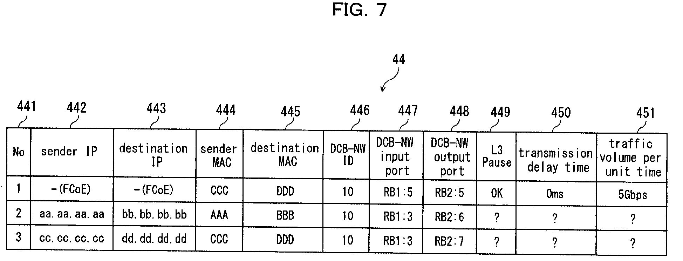

The traffic management database 44 is a database that stores data related to the traffic being communicated in the information processing system 1. The traffic management database 44 will be detailed below with reference to FIG. 7.

The physical ports 45-1 to 45-6 are each physical port that connects devices that are connected to the DCB switch 4 with each other.

Hereinafter, one of the multiple physical ports is specified by one reference symbol among 45-1 to 45-6; and an arbitrary physical port is represented by the reference symbol 45.

As described above, the physical port 45-1 of the DCB switch 4 is connected to the physical port 35-6 of the Ethernet switch 3 via the LAN cable 7.

The physical port 45-4 of the DCB switch 4 is connected to the iSCSI storage 5 via a LAN cable 8.

The DCB switch 4 is not directly connected to the iSCSI server 2, but is connected to the iSCSI server 2 via the Ethernet switch 3.

The iSCSI storage 5 receives a disc access command, such as read/write, from the iSCSI server 2, and responsively reads and writes data from and into the memory region of the iSCSI storage 5.

The iSCSI storage 5 includes a CPU 51 and a memory 52, and stores the congestion control program 121.

The CPU 51 is a processing device that carries out various controls and calculations, and performs various processes by executing programs stored in, for example, an unillustrated ROM.

The memory 52 stores, for example, a program and various pieces of data that the CPU 51 is to execute and use, and data obtained in various processes performed by the CPU 51. Examples of the memory 52 include various existing memory devices, such as a RAM and a ROM. The memory 52 may be a combination of memory devices in different types.

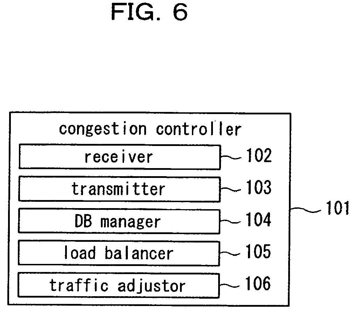

FIG. 6 is a schematic diagram illustrating the functional configuration of the congestion controller 101 as an example of an embodiment.

Executing the congestion control program 121 stored in the storage device 43, the CPU 41 of the DCB switch 4 functions as a congestion controller (communication controller) 101.

Executing the congestion control program 121 stored in the storage device 23 and the iSCSI storage 5, both the CPU 21 of the iSCSI server 2 and the CPU 51 of the iSCSI storage 5 respectively function as the congestion controller 101.

The congestion controller 101 includes a receiver (determiner) 102, a transmitter 103, a database manager 104, a load balancer 105, and a traffic adjuster 106.

The receiver 102 monitors frames and traffic flowing in the DCB network 400 and determines whether each frame is an ISCSI frame or an FCoE frame. The receiver 102 obtains a traffic flow volume of each physical port 45 of the DCB switch 4, compares the obtained volume with a buffer capacity, and, if the buffer is to overflowing with the traffic shortly, determines that the congestion is occurring.

In addition, the receiver 102 receives an L3 Pause signal, which is an IP-level command to control a traffic flow volume when congestion is occurring. At that time, in order to exclude an L3 Pause signal transmitted from a DCB switch out of the communication path, the receiver 102 authenticates a received L3 Pause signal as one transmitted from another valid DCB switch on the communication path. For example, upon detection of a log-in sequence of iSCSI, the receiver 102 carries out the authentication by determining whether the DCB switch that is the sender of the received L3 Pause signal exists on the path between the iSCSI server 2 and the ISCSI storage 5.

When the receiver 102 detects occurrence of congestion, the transmitter 103 generate an L3 Pause instructing the iSCSI server 2 to reduce the traffic flow volume and transmits the resultant L3 Pause to the iSCSI server 2. Besides, the traffic adjustor 106, which is to be detailed below, adjusts a traffic flow volume by issuing a PFC to an FCoE device.

When the receiver 102 determines occurrence of congestion, the load balancer 105 calculates distribution of load balance in accordance with respective traffic volumes. Specifically, when the load balancer 105 instructs the iSCSI devices 2 and 5 using an L3 Pause signal, suspension times are distributed, considering delay times of the network. The details of this process will be explained below.

The traffic adjustor 106 adjusts the traffic flow volume by following the L3 Pause signal that the receiver 102 receives. The details of this process will be explained below.

The database manager 104 writes data into the traffic management database 44 and updates the data in the traffic management database 44.

FIG. 7 is a diagram illustrating an exemplary configuration of the traffic management database 44 as an example of an embodiment.

The traffic management database 44 includes the following fields: number (No) 441, sender IP 442, destination IP 443, sender MAC 444, destination MAC 445, DCB-NW ID 446, DCB-NW input physical port 447, DCB-NW output physical port 448, L3 Pause 449, transmission delay time 450, and traffic volume 451 per unit time.

The number field 441 stores an identifier (ID) that uniquely identifies traffic data in the traffic management database 44.

The sender IP field 442 stores the IP address of a sender of the traffic, if being IP traffic. When the traffic is FCoE traffic, information indicating FCoE traffic (in the example in FIG. 7, "-(FCoE)") is written into the field 442.

In the destination field 443 stores the IP address of a destination of the traffic, if being IP traffic. When the traffic is FCoE traffic, information indicating FCoE traffic is recorded into the field 443.

The sender MAC field 444 stores the MAC address of the sender device of the traffic.

The destination MAC field 445 stores the MAC address of the destination of the traffic.

The DCB-NW ID field 446 stores an identifier (ID) that uniquely identifies a DCB network 400 that has detected the traffic.

The DCB-NW input physical port field 447 stores the port number of an input physical port of the DCB switch 4 corresponding to the DCB network 400 specified by the value of the DCB-NW ID field 446.

The DCB-NW output physical port field 448 stores the port number of an output physical, port of the DCB switch 4 corresponding to the DCB network 400 specified by the value of the DCB-NW ID field 446.

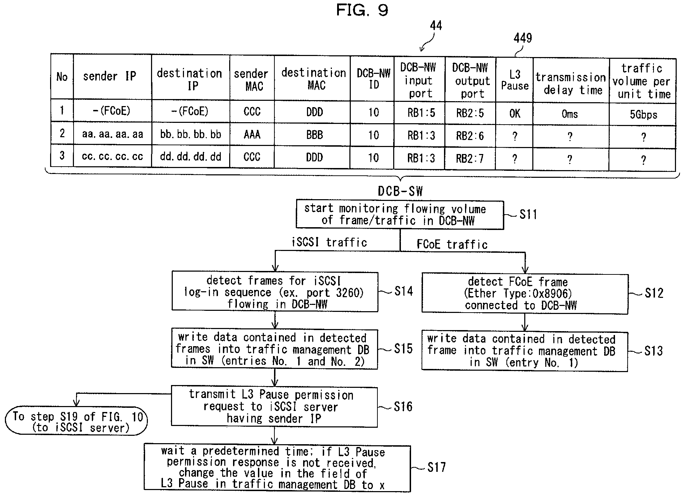

The L3 Pause field 449 stores a value indicating whether the traffic is allowed to use an L3 Pause signal. In the example in FIGS. 9-12, when use of an L3 Pause signal is allowed, "OK" is recorded in the L3 Pause field 449; when use of an L3 Pause is not allowed, "NG" is recorded in the field 449; and when it is unknown whether use of an L3 Pause is allowed, "?" is recorded in the field 449.

The transmission delay time field 450 stores the value representing a transmission delay time in units of, for example, millisecond (ms).

The traffic volume field 451 per unit time stores a volume of the traffic per unit time in units of, for example, Gbps.

In the above-described embodiment, the CPUs 21, 41, and 51 of the iSCSI server 2, the DCB switch 4, and the iSCSI storage 5 function as the congestion controller 101, the receiver 102, the transmitter 103, the database manager 104, the load balancer 105, and the traffic adjustor 106.

The program (congestion control program 121) that achieves the functions of the congestion controller 101, the receiver 102, the transmitter 103, the database manager 104, the load balancer 105, and the traffic adjustor 106 are provided in the form of being recorded in a tangible and non-transient computer-readable storage medium 122, such as a flexible disk, a CD (e.g., CD-ROM, CD-R, and CD-RW), a DVD (DVD-ROM, DVD-RAM, DVD-R, DVD+R, DVD-RW, and DVD+RW), a magnetic disk, a recording medium, an magneto-optical disk. A computer reads the program from the recording medium 122 using the medium reader 24 and stores the read program in an internal or external storage device for future use. Alternatively, the program may be recorded in a recording device (in the above-described embodiment, the 122) such as a magnetic disk, a recording medium, or a magneto-optical disk, and may be provided from the recording device to the computer via a communication path.

Further alternatively, in achieving the functions of the congestion controller 101, the receiver 102, the transmitter 103, the database manager 104, the load balancer 105, and the traffic adjustor 106, the program stored in an internal storage device (corresponding to the memories 22, 32, and 52, and storage devices 23 and 43 as an example of an embodiment) is executed by the microprocessor (corresponding to the CPU 21, 41, and 51 as an example of an embodiment) of the computer. At that time, the computer may read the program stored in the recording medium 122 and may execute the program.

In the present embodiment, a computer is a concept of a combination of hardware and an operating system (OS), and means hardware which operates under control of the OS. Otherwise, if a program does not need an OS but does operate hardware independently of an OS, the hardware itself corresponds to the computer. Hardware includes at least a microprocessor such as a CPU and means to read a computer program recorded in a recording medium. In the present embodiment, the iSCSI server 2, the DCB switch 4, and the iSCSI storage 5 each have a function of a computer.

### (B) Operation

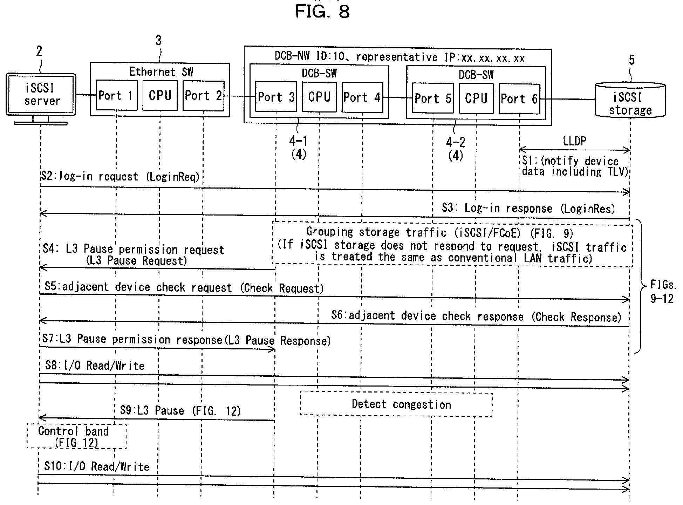

Next, the congestion control in the information processing system 1 as an example of an embodiment will be described with reference to FIGS. 8-12.

First, the overview of the congestion control performed in the information processing system 1 will be described with reference to FIG. 8.

FIG. 8 is a time chart (steps S1-S10) of a process flow in the information processing system 1 as an example of an embodiment.

Here, the DCB switches 4-1 and 4-2 constitute a group of switches connected to the DCB network 400 having an ID=10, and the representative IP address of the switch group is set to be "xx.xx.xx.xx".

In the first step S1, device information of an adjacent device is collected between the DCB switch 4-2 and the iSCSI storage 5 using the Layer Discovery Protocol (LLDP). The LLDP data transmitted in step S1 has basic elements of three fields of Type (T), Length (L), and Value (V), and serves as the device information. This processing has been known to the art, so description thereof is omitted here.

In the next steps S2, the ISCSI server 2 transmits a log-in request (LoginReq) to the ISCSI storage 5.

Upon receipt of the log-in request (LoginReq) from the ISCSI server 2, the iSCSI storage 5 replies to the iSCSI server 2 with a log-in response (LoginRes). The log-in request and the log-in response have been known to the art, so description thereof is omitted here.

If the iSCSI storage 5 responds, the DCB switch 4-1 groups the storage traffic (iSCSI/FCoE). Here, the terms "to group" and "grouping" means that iSCSI storage traffic and FCoE storage traffic are centralizedly managed in the traffic management database 44.

In contrast, if the iSCSI storage 5 does not respond, the storage traffic (iSCSI/FCoE) is not grouped and the iSCSI traffic is subsequently treated as normal LAN traffic.

In step S4, the DCB switch 4-1 transmits an L3 Pause permission request (L3 Pause Request, see FIG. 4) to the iSCSI server 2.

After that, in step S5, the iSCSI server 2 transmits an adjacent device check request (Check Request, see FIG. 4) to the iSCSI storage 5.

Upon receipt of the adjacent device check request (Check Request, see FIG. 3A) from iSCSI server 2, the ISCSI storage 5 replies to the iSCSI server 2 with an adjacent device check response (Check response, see FIG. 3B) in step S6.

In the ensuing step S7, the iSCSI server 2 transmits an L3 Pause permission response (L3 Pause Response) to the DCB switch 4-1 in repose to the L3 Pause permission request (L3 Pause Request) received in step S4.

In step S8, the ISCSI server 2 performs the I/O Read/Write on the iSCSI storage 5.

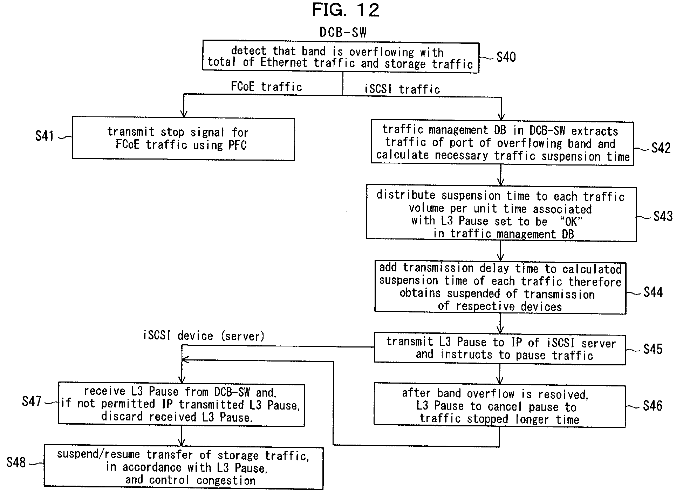

Upon detection of occurrence of congestion, the DCB switch 4-1 transmits an L3 Pause signal to the ISCSI server 2. This process will be detailed below with reference to FIG. 12.

After the L3 Pause signal is transmitted, band control is carried out to resolve the congestion. The band control will be detailed below with reference to FIG. 12.

Then, in step S10, the traffic adjustor 106 of the ISCSI server 2 restricts the band, and the ISCSI server 2 performs the I/O Read/Write on the ISCSI storage 5.

Next, the process in FIG. 8 is further detailed with reference to FIGS.9-12.

FIGS. 9-12 are flow diagrams denoting a succession of detailed procedural steps (steps S11-S48) performed in the information processing system 1 as an example of an embodiment.

In step S11 in FIG. 9, the receiver 102 of the DCB switch 4 starts monitoring volume of frames/traffic flowing in the DCB network 400.

If FCoE traffic is monitored (see the "FCoE traffic" path), the receiver 102 detects an FCoE frame (EtherType: 0×8906) connected to the DCB network 400 in step S12.

In step S13, the database manager 104 writes data contained in the frame detected in step S12 into the traffic management database 44.

At that time, an entry No. 1 denoted in FIG. 9 is registered into the traffic management database 44 of the DCB switch 4.

The traffic of entry No.1 is FCoE traffic, and represents that use of an L3 Pause signal is permitted and the transmission delay time and the traffic volume per unit time are 0 ms and 5 Gbps, respectively.

Here, FCoE devices 9 and 10 are compliant with DCB, and are capable of controlling traffic of a particular device. For this reason, the receiver 102 can eliminate determination as to whether the FCoE devices 9 and 10 are compliant with L3 Pause.

In contrast, if iSCSI traffic is monitored (see "iSCSI traffic" path), the receiver 102 of the DCB switch 4 detects a frame of iSCSI log-in sequence flowing in the DCB network 400 at, for example, port 3260 in step S14.

In step S15, the database manager 104 writes data contained in the frame detected in step S14 into the traffic management database 44 of the DCB switch 4.

At that time, entries No. 2 and No. 3 denoted in FIG. 9 are registered into the traffic management database 44.

The traffics of the entries No. 2 and 3 are IP traffics, and whether use of an L3 Pause signal is permitted, a transmission delay time, and a traffic volume per unit time are unknown and represented by "?" in the respective corresponding fields because L3 Pause has not been permitted yet.

In step S15, the transmitter 103 generates a frame of an L3 Pause permission request (L3 Pause Request, see FIG. 4A) that is to be transmitted to the iSCSI server 2 that is the sender of the frame detected in step S14.

In the L3 Pause permission request frame, various pieces information such as authenticated device information (non-encrypted), L3 Pause permission requesting device information (non-encrypted), and a DCB network ID (encrypted) are described. For example, in the entry No. 2 in the traffic management database 44 in FIG. 9, "bb.bb.bb.bb" and "BBB" respectively representing the IP address and the MAC address of the destination iSCSI storage 5 are described as the authenticated device information; and "xx.xx.xx.xx" representing the representative IP address of the DCB network 400 is described as the L3 Pause permission requesting device information. The authenticated device information and the L3 Pause permission requesting device information described into the entry No.2 are not encrypted. In contrast, the ID "10" of the DCB network 400 is described in the form of being encrypted to represent the DCB network ID.

The encryption uses, for example, the MAC address of the physical port that has transmitted iSCSI traffic the latest in the DCB network 400 as an encryption key. This means that the encryption key to be used is the MAC address of an output port of the DCB network.

In step S16, the transmitter 103 transmits the resultant L3 Pause permission request frame.

In step S17, the receiver 102 waits a predetermined time for reception of an L3 Pause permission response (L3 Pause Response, see FIG. 4) from the iSCSI server 2. If the iSCSI server 2 does not respond with an L3 Pause permission request even when the predetermined time elapses, the database manager 104 changes the value of the L3 Pause field 449 of the traffic management database 44 to "NG".

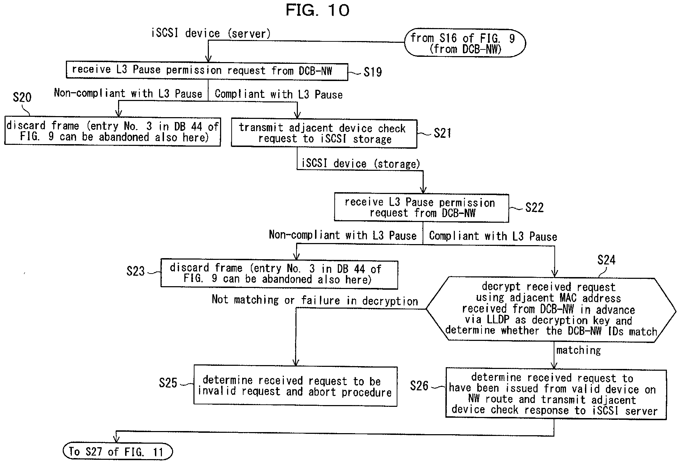

Next, in step S19 in FIG. 10, the iSCSI server 2 receives the L3 Pause permission request transmitted from the DCB network 400 in step S16 in FIG. 9.

If the iSCSI server 2 supports L3 Pauses, the ISCSI server 2 discards, in step S20, the L3 Pause permission request frame received in step S19. For example, the traffic of the entry No. 3 in the traffic management database 44 in FIG. 9 may be discarded here.

On the other hand, if the ISCSI server 2 is a device compliant with the L3 Pause, the transmitter 103 of the iSCSI server 2 transmits, in step S21, an adjacent device check request (Check Request, see FIG. 3A) to the iSCSI storage 5.

In the example of the entry No.2 of the traffic management database 44 in FIG. 9, the frame of the adjacent device check request transmitted in step S21 is encrypted information transmitted from the DCB switch 4 and is transferred as an adjacent device check request without undergoing any process.

In step S22, the iSCSI storage 5 receives the adjacent device check request as an L3 Pause permission request transmitted from the DCB network 400 in step S21.

If the iSCSI storage 5 is a device not compliant with the L3 Pause, the iSCSI storage 5 discards, in step S23, the L3 Pause permission request frame received in step S22. For example, the traffic of the entry No. 3 in the traffic management database 44 in FIG. 9 may be discarded here.

In contrast, the iSCSI storage 5 supports L3 Pause, the receiver 102 of the iSCSI storage 5 decrypts the received L3 Pause permission request using the adjacent MAC address that has been received from DCB switch 4 in advance via the LLDP as a decryption key, and carries out the authentication process by comparing the decrypted DCB NW ID and the DCB NW ID associated with the adjacent MAC address in step S24.

If the compared DCB NW IDs do not match or the decryption fails (see "not matching or failure in decryption" path of step S24), the receiver 102 determines the received L3 Pause permission request to be invalid and aborts the procedure in step S25.

In contrast, if the compared DCB NW IDs match (see "matching" path of step S24), the receiver 102 determines the received L3 Pause permission request to have been issued from a valid device on the network path in step S26. Then the transmitter 103 of the iSCSI storage 5 replies to the ISCSI server 2 with an adjacent device check response (Check Response, see FIG. 3B).

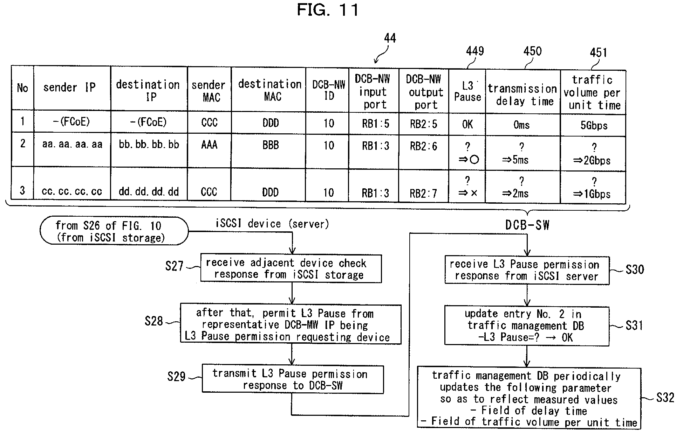

After that, in step S27 in FIG. 11, the receiver 102 of the iSCSI server 2 receives the adjacent device check response transmitted from the iSCSI storage 5 in step S26 in FIG. 10.

In step S28, the transmitter 103 of the iSCSI server 2 permits a later L3 Pause signal from the representative IP of the DCB network 400, which is the L3 Pause permission requesting device.

In step S29, the transmitter 103 of the ISCSI server 2 transmits an L3 Pause permission response to the DCB switch 4.

In step S30, the receiver 102 of the DCB switch 4 receives the L3 Pause permission request transmitted from the iSCSI server 2 in step S29.

In step S31, the database manager 104 of the DCB switch 4 changes the value of the L3 Pause field 449 of the entry No. 2 in the traffic management database 44 into "OK", as denoted in the traffic management database 44 in FIG. 11.

After that, in step S32, the receiver 102 of the DCB switch 4 periodically measures the traffic delay time and the traffic volume per unit time. Then the database manager 104 updates the values in the delay time field 450 and the traffic volume filed 450 per unit time in the traffic management database 44 into, for example, the state in FIG. 11, using the measured values.

FIG. 12 denotes a case where a congestion occurs in the information processing system 1.

In step S40 in FIG. 12, the receiver 102 of the DCB switch 4 detects that the h the total of the Ethernet traffic and storage traffic exceeds the band (bandwidth overflow). The example to be described below assumes a case where a request for 12-Gbps traffic is directed to a 10-Gpbs band in application of the single band controlling policy setting the maximum storage traffic to 6 Gpbs in total.

If the storage traffic is FCoE traffic (see "FCoE traffic" path), the transmitter 103 of the DCB switch 4 transmits a stop signal for the FCoE traffic using the PFC in step S41. PFC and a stop single for FCoE are publically known, so detailed description thereof is omitted here.

On the other hand, if the storage traffic is iSCSI traffic (see "iSCSI traffic" path), the load balancer 105 of the DCB switch 4 extracts the traffic of the port that has caused the bandwidth overflow and calculates a necessary traffic suspension time with reference to the traffic management database 44 in step S42. Here, it is assumed that the load balancer 105 calculates the total storage traffic of the physical port that has caused the bandwidth overflow to be 8 Gbps and calculates the necessary traffic suspension time to be 4 ms in order to reduce the current 8-Gbps storage traffic to the 6-bps, which the applied single band controlling policy allows.

In step S43, the load balancer 105 distributes the traffic suspension time calculated in step S42 among traffics in order to balance the load such that the balance among the traffics is not changed. For example, the suspension time are to be distributed among all the traffics having the values of the L3 Pause field 449 set to be "OK" in the traffic management database 44 in accordance with the respective values in the traffic volume field 451 per unit time of the traffics.

In the example in FIG. 11, since the traffic of the entry No. 1 has a transmission delay time of 0 ms and a traffic volume per unit time of 5 Gbps, the delay time of the traffic of the entry No. 1 is calculated to be 4ms×(8Gbps-5Gbps)/8Gbps=1.5ms.

Similarly, for the traffic of the entry No. 2, which has a delay time of 5 ms and a traffic volume of 2 Gbps, the delay time of the traffic is calculated to be 4ms×(8Gbps-2Gbps)/8Gbps=3.0ms.

Similarly, for the traffic of the entry No. 3, which has a delay time of 2 ms and a traffic volume of 1 Gbps, the delay time of the traffic is calculated to be 4 ms × (8 Gbps - 1 Gbps)/8 Gbps = 3.5 ms.

As set forth above, the load balancer 105 sets a shorter suspension time for a traffic having a larger traffic volume while sets a longer suspension time for a traffic having a smaller traffic volume.

In step S44, the load balancer 105 calculates the suspension time on the transmission to each device, considering the delay time. For example, the load balancer 105 calculates the suspension time on the transmission to each device by adding the corresponding value of the transmission delay time field 450 to the suspension time calculated in step S43.

For example, the suspension time of the traffic of the entry No. 1, which has a transmission delay time of 0 ms, is calculated to be 1.5ms+0ms=1.5ms.

Similarly, the suspension time of the traffic of the entry No. 2, which has a transmission delay time of 5 ms, is calculated to be 3.0 ms + 5 ms = 8 ms.

The suspension time of the traffic of the entry No. 3, which has a transmission delay time of 2 ms, is calculated to be 3.5 ms + 2 ms = 5.5 ms.

In step S45, the transmitter 103 transmits an L3 Pause signal to the IP address of the iSCSI server 2 and thereby instructs the iSCSI server 2 to suspend the traffic. For example, "pause" is set into the operation code 503 (see FIG. 2) of the L3 Pause signal and "8 ms" is set into the suspension time 504 (see FIG. 2).

When the bandwidth overflow is eliminated, the transmitter 103 transmits an L3 Pause signal to cancel the suspension to the traffics in the order of longer stop times. For example, "start" is set into the operation code 503 (see FIG. 2) of the L3 Pause signal and "0 ms" is set into the suspension time 504 (see FIG. 2).

In step S47, the receiver 102 of the iSCSI server 2 receives the L3 Pause signal transmitted from the DCB switch 4 in step S45. If the received L3 Pause signal is transmitted from a device that is not allowed to use the L3 Pause, the receiver 102 discards the received L3 Pause signal.

In the ensuing step S48, the traffic adjustor 106 of the iSCSI server 2 carries out congestion control by suspending or resuming transfer of storage traffic in accordance with the L3 Pause signal.

The example of an embodiment has been described in the context where the iSCSI server 2 transmits data to the iSCSI storage 5 (e.g., a Write to iSCSI storage 5). The example of an embodiment can also applicable to transmitting data from the storage 5 to the iSCSI server 2 (e.g., transmitting a Read from the iSCSI storage 5).

As detailed above, the use of an L3 Pause signal as an example of an embodiment can avoid any packet losses in an iSCSI traffic in the DCB network 400.

Unlike a conventional Pause signal on MAC level, an L3 Pause signal as an example of an embodiment can be issued even in a system in which the DCB switch 4 is not directly connected to the iSCSI server 2 but, for example, an Ethernet network is interposed between the DCB switch 4 and the iSCSI server 2.

As set forth above, an example of an embodiment reduces packet loss of iSCSI traffic, keeping communication with the Ethernet switch 3 in the DCB network 400.

In accordance with an example of an embodiment, the iSCSI packet loss is minimized to reduce the frequency of retransmission of iSCSI packets. Consequently, the communication performance can be improved.

Furthermore, the delay can be dispersed by setting a delay time to be shorter for traffic having a larger traffic volume and to be longer for traffic having a smaller traffic volume.

### (C) Modification

As a modification to the above embodiment, the ISCSI storage 5 may have the function of the DCB switch 4.

In this modification, one of the physical ports of the iSCSI storage 5 is configured to be a unified physical port into which FCoE, LAN, and iSCSI traffics flow.

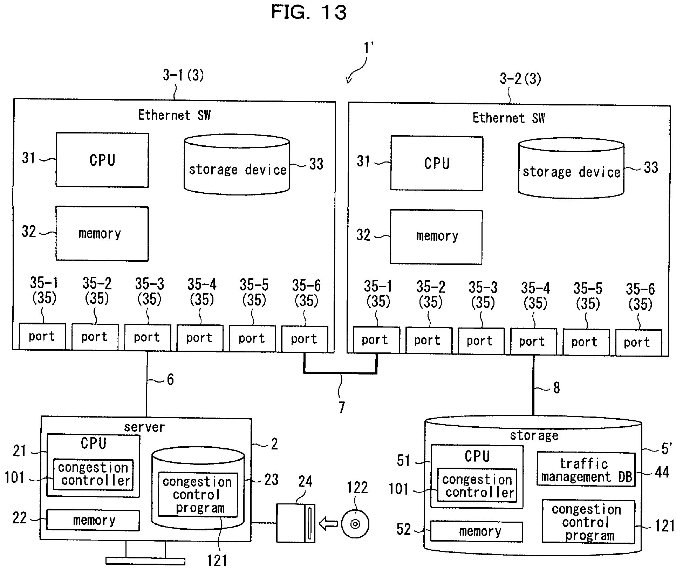

FIG. 13 is a schematic diagram illustrating the system configuration of an information processing system 1' according to a modification to an embodiment.

The information processing system 1' includes an iSCSI server 2, Ethernet switches 3-1 and 3-2, and an iSCSI storage 5'. Unlike the configuration illustrated in FIG. 5, the information processing system 1' does not use the DCB switch 4.

In FIG. 13, elements having the same reference symbols as those of the elements in FIG. 5 have functions and configurations similar to their counterparts, and their descriptions are omitted.

The Ethernet switches 3-1 and 3-2 have the same function and configuration as the Ethernet switch 3 as an example of an embodiment illustrated in FIG. 5, so its description is omitted.

The ISCSI storage 5' receives disk access commands, such as a Read or a Write, from the iSCSI server 2, and writes and reads data to and from the memory region of the iSCSI storage 5'.

The iSCSI storage 5' includes a CPU 51, a memory 52, a traffic management database 44, and a congestion control program 121.

The CPU 51 is a processing device that carries out various controls and calculations, and performs various processes by executing programs stored in, for example, an unillustrated ROM.

The memory 52 stores, for example, a program executed by the CPU 51 and various pieces of data, and data generated in processes performed by the CPU 51. Examples of the memory 52 include, for example, various existing memory devices such as a RAM and a ROM. The memory 52 may be a combination of memory devices in different types.

The traffic management database 44 is a database that stores data related to the traffic and being communicated in the information processing system 1'.

The traffic management database 44 as an example of an embodiment is included in the DCB switch 4 while the traffic management database 44 of this modification is included in the iSCSI storage 5'.

In addition to the advantageous effects as an example of an embodiment, this modification ensures further advantage that congestion control is achieved directly between the iSCSI storage 5' and the iSCSI server 2 even in the absence of the DCB switch 4.

### (D) Others

The foregoing embodiment and modification have been described. However, various changes and modification can be suggested.

For example, a second modification to the above embodiment may provide the functions of the DCB switch 4 to the ISCSI server 2.

Furthermore, the load balancer 105 carries out load balancing using the traffic volume and the transmission delay in an example of an embodiment. Alternatively, the load balancing by the load balancer 105 may be based on another parameter.

The technique disclosed herein, frame loss of iSCSI packets can be avoided in a DCB network.

## Claims

1. A communication controller (101) that is adapted to control communications in a network (400), the communication controller (101) comprising:
a) a determiner (102) that is adapted to determine that a congestion occurs in the network (400) according to traffic of a predetermined standard of traffic (FCoE; iSCSI), flowing in the network (400), of a plurality of standards(FCoE; iSCSI); and
b) a transmitter (103) that is adapted to transmit a signal instructing to adjust a traffic volume, according to the traffic of the predetermined standard, to a party to which the congestion is attributable.

2. The communication controller (101) according to claim 1, further comprising a load balancer (105) that is adapted to calculate a congestion balance.

3. The communication controller (101) according to claim 2, further comprising a storage unit (44) that is adapted to store information on traffic flowing through the network (400),
the load balancer (105) being adapted to distribute the traffic volume to be adjusted to a plurality of traffic, in accordance with the information on the plurality of traffics stored in the storage unit (44).

4. The communication controller (101) according to any one of claims 1-3, further comprising a receiver (102) that is adapted to receive a second signal instructing to adjust the traffic volume from a second controller, and is adapted to determine whether the second controller is on a path between the communication controller (101) and the second controller in the network (400),
when the receiver (102) determines that the second controller is on the path in the network (400), the transmitter (103) transmitting the second signal to a destination of the second signal.

5. A method of controlling communications in a network (400),
comprising the following steps:
a) determining that a congestion occurs in the network (400) according to traffic of a predetermined standard of traffic (FCoE; iSCSI), flowing in the network (400), of a plurality of standards(FCoE; iSCSI); and
b) transmitting a signal instructing to adjust a traffic volume, according to the traffic of the predetermined standard, to a party to which the congestion is attributable.

6. The method according to claim 5, further comprising calculating a congestion balance.

7. The method according to claim 5, further comprising:
storing information on traffic flowing through the network (400) into a memory (44); and
adjusting the traffic volume, in accordance with the information on a plurality of different types of traffic stored in the storage unit (44).

8. The method according to any one of claims 5-7, further comprising:
receiving a second signal instructing to adjust the traffic volume from a second controller;
determining whether the second controller is on a path between a device carrying out this method in the network (400) and the second controller in the network (400); and
transmitting, when it is determined that the second controller is on the path in the network (400), the second signal to a destination of the second signal.

9. A communication control program for controlling communications in a network (400), upon being executed by a computer, the program causing the computer to carry out all the steps of one or more of the method claims 5-8.

10. The communication control program according to claim 9, the communication control program further causing the computer to calculate a congestion balance.

11. The communication control program according to claim 10, the communication control program further causing the computer to:
store information on traffic flowing through the network (400) into a storage unit (44); and
adjust the traffic volume, in accordance with the information on a plurality of types of traffic stored in the storage unit (44).

12. The communication control program according to claim 9, the process further comprising:
receive a second signal instructing to adjust the traffic volume from a second controller;
determine whether the second controller is on a path between a device carrying out this method in the network (400) and the second controller in the network (400); and
transmit, when it is determined that the second controller is on the path in the network (400), the second signal to a destination of the second signal.

## Patentansprüche

1. Eine Kommunikationssteuereinheit (101), welche zum Steuern von Kommunikation in einem Netzwerk (400) angepasst ist, wobei die Kommunikationssteuereinheit (101) umfasst:
a) eine Bestimmungseinheit (102), welche angepasst ist, zu bestimmen, dass eine Überlastung in dem Netzwerk (400) auftritt, entsprechend eines Verkehrs eines vorbestimmten Standards eines Verkehrs (FCoE; iSCSI), welcher in dem Netzwerk (400) fließt, einer Vielzahl von Standards (FCoE; iSCSI); und
b) eine Übertragungseinheit (103), welche angepasst ist, ein zum Einstellen eines Verkehrsvolumens anweisendes Signal, entsprechend dem Verkehr des vorbestimmten Standards, an einen Beteiligten zu übertragen, zu welchem die Überlastung zuordenbar ist.

2. Kommunikationssteuereinheit (101) gemäß Anspruch 1, weiter umfassend eine Lastausgleichseinheit (105), welche zum Berechnen eines Überlastungsausgleichs angepasst ist.

3. Kommunikationssteuereinheit (101) gemäß Anspruch 2, weiter umfassend eine Speichereinheit (44), welche zum Speichern von Informationen über einen durch das Netzwerk (400) fließenden Verkehr angepasst ist,
wobei die Lastausgleichseinheit (105) zum Verteilen des einzustellenden Verkehrsvolumens auf eine Vielzahl von Verkehr angepasst ist, entsprechend den auf der Speichereinheit (44) gespeicherten Informationen über die Vielzahl von Verkehren.

4. Kommunikationssteuereinheit (101) gemäß einem der Ansprüche 1-3, weiter umfassend eine Empfangseinheit (102), welche angepasst ist, ein zum Einstellen des Verkehrsvolumens anweisendes zweites Signal von einer zweiten Steuereinheit zu empfangen, und angepasst ist, zu bestimmen, ob die zweite Steuereinheit auf einem Fahrrad zwischen der Kommunikationssteuereinheit (101) und der zweiten Steuereinheit in dem Netzwerk (400) ist,
wenn die Empfangseinheit (102) bestimmt, dass die zweite Steuereinheit auf dem Pfad in dem Netzwerk (400) ist, überträgt die Übertragungseinheit (103) das zweite Signal an ein Ziel des zweiten Signals.

5. Ein Verfahren zum Steuern von Kommunikation in einem Netzwerk (400), umfassend die folgenden Schritte:
a) Bestimmen, dass eine Überlastung in dem Netzwerk (400) aufgetreten ist, entsprechend einem Verkehr eines vorbestimmten Standards eines Verkehrs (FCoE; iSCSI), welcher in dem Netzwerk (400) fließt, einer Vielzahl von Standards (FCoE; iSCSI); und
b) Übertragen eines zum Einstellen eines Verkehrsvolumens anweisenden Signals, entsprechend dem Verkehr des vorbestimmten Standards, an einen Beteiligten, zu welchem die Überlastung zuordenbar ist.

6. Verfahren gemäß Anspruch 5, weiter umfassend Berechnen eines Überlastungsausgleichs.

7. Verfahren gemäß Anspruch 5, weiter umfassend:
Speichern von Informationen über einen durch das Netzwerk (400) fließenden Verkehr auf einem Speicher (44); und
Einstellen des Verkehrsvolumens, entsprechend den auf der Speichereinheit (44) gespeicherten Informationen über eine Vielzahl von unterschiedlichen Typen von Verkehr.

8. Verfahren gemäß einem der Ansprüche 5-7, weiter umfassend:
Empfangen eines zum Einstellen des Verkehrsvolumens anweisenden zweiten Signals von einer zweiten Steuereinheit;
Bestimmen, ob die zweite Steuereinheit auf einem Pfad zwischen einer dieses Verfahren ausführenden Vorrichtung in dem Netzwerk (400) und der zweiten Steuereinheit in dem Netzwerk (400) ist; und
Übertragen, wenn bestimmt ist, dass die zweite Steuereinheit auf dem Pfad in dem Netzwerk (400) ist, des zweiten Signals an ein Ziel des zweiten Signals;.

9. Ein Kommunikationssteuerprogramm zum Steuern von Kommunikation in einem Netzwerk (400), auf ein Ausgeführtwerden durch einen Computer, wobei das Programm den Computer zum Ausführen aller Schritte nach einem oder mehreren der Verfahrensansprüche 5-8 veranlasst.

10. Kommunikationssteuerprogramm gemäß Anspruch 9, wobei das Kommunikationssteuerprogramm den Computer weiter zum Berechnen eines Überlastungsausgleichs veranlasst.

11. Kommunikationssteuerprogramm gemäß Anspruch 10, wobei das Kommunikationssteuerprogramm den Computer weiter veranlasst zum:
Speichern von Informationen über einen durch das Netzwerk (400) fließenden Verkehr auf einer Speichereinheit (44); und
Einstellen des Verkehrsvolumens, entsprechend den auf der Speichereinheit (44) gespeicherten Informationen über eine Vielzahl von Typen von Verkehr.

12. Kommunikationssteuerprogramm gemäß Anspruch 9, wobei der Prozess weiter umfasst:
Empfangen eines zum Einstellen des Verkehrsvolumen anweisenden zweiten Signals von einer zweiten Steuereinheit;
Bestimmen, ob die zweite Steuereinheit auf einem Pfad zwischen einer dieses Verfahren ausführenden Vorrichtung in dem Netzwerk (400) und der zweiten Steuereinheit in dem Netzwerk (400) ist; und
Übertragen, wenn bestimmt ist, dass die zweite Steuereinheit auf dem Pfad in dem Netzwerk (400) ist, des zweiten Signals an ein Ziel des zweiten Signals.

## Revendications

1. Contrôleur de communication (101) qui est apte à commander des communications dans un réseau (400), le contrôleur de communication (101) comprenant :
a) un module de détermination (102) qui est apte à déterminer qu'un encombrement se produit dans le réseau (400), selon un trafic d'une norme de trafic prédéterminée (FCoE; iSCSI) circulant dans le réseau (400), d'une pluralité de normes (FCoE; iSCSI) ; et
b) un émetteur (103) qui est apte à émettre un signal ordonnant d'ajuster un volume de trafic, selon le trafic de la norme prédéterminée, à une partie à laquelle l'encombrement est imputable.

2. Contrôleur de communication (101) selon la revendication 1, comprenant en outre un équilibreur de charge (105) qui est apte à calculer un équilibre d'encombrement.

3. Contrôleur de communication (101) selon la revendication 2, comprenant en outre une unité de stockage (44) qui est apte à stocker des informations sur le trafic circulant à travers le réseau (400) ;
l'équilibreur de charge (105) étant apte à distribuer le volume de trafic, à ajuster à une pluralité de trafics, selon les informations sur la pluralité de trafics stockées dans l'unité de stockage (44).

4. Contrôleur de communication (101) selon l'une quelconque des revendications 1 à 3, comprenant en outre un récepteur (102) qui est apte à recevoir un second signal ordonnant d'ajuster le volume de trafic, à partir d'un second contrôleur, et est apte à déterminer si le second contrôleur est sur un chemin entre le contrôleur de communication (101) et le second contrôleur dans le réseau (400) ;
dans lequel lorsque le récepteur (102) détermine que le second contrôleur est sur le chemin dans le réseau (400), l'émetteur (103) transmet le second signal vers une destination du second signal.

5. Procédé de commande de communications dans un réseau (400), comprenant les étapes ci-dessous consistant à :
a) déterminer qu'un encombrement se produit dans le réseau (400), selon un trafic d'une norme de trafic prédéterminée (FCoE ; iSCSI) circulant dans le réseau (400), d'une pluralité de normes (FCoE; iSCSI); et
b) émettre un signal ordonnant d'ajuster un volume de trafic, selon le trafic de la norme prédéterminée, à une partie à laquelle l'encombrement est imputable.

6. Procédé selon la revendication 5, comprenant en outre l'étape consistant à calculer un équilibre d'encombrement.

7. Procédé selon la revendication 5, comprenant en outre les étapes ci-dessous consistant à :
stocker des informations sur le trafic circulant à travers le réseau (400) dans une mémoire (44) ; et
ajuster le volume de trafic, selon les informations sur une pluralité de différents types de trafic stockées dans l'unité de stockage (44).

8. Procédé selon l'une quelconque des revendications 5 à 7, comprenant en outre les étapes ci-dessous consistant à :
recevoir un second signal ordonnant d'ajuster le volume de trafic à partir d'un second contrôleur ;
déterminer si le second contrôleur est sur un chemin entre un dispositif mettant en oeuvre ce procédé dans le réseau (400) et le second contrôleur dans le réseau (400) ; et
transmettre, lorsqu'il est déterminé que le second contrôleur est sur le chemin dans le réseau (400), le second signal vers une destination du second signal.

9. Programme de commande de communication destiné à commander des communications dans un réseau (400), lorsqu'il est exécuté par un ordinateur, le programme amenant l'ordinateur à mettre en oeuvre toutes les étapes selon l'une ou plusieurs des revendications de procédé 5 à 8.

10. Programme de commande de communication selon la revendication 9, le programme de commande de communication amenant en outre l'ordinateur à calculer un équilibre d'encombrement.

11. Programme de commande de communication selon la revendication 10, le programme de commande de communication amenant en outre l'ordinateur à :
stocker des informations sur le trafic circulant à travers le réseau (400) dans une unité de stockage (44) ; et
ajuster le volume de trafic, selon les informations sur une pluralité de types de trafic stockées dans l'unité de stockage (44).

12. Programme de commande de communication selon la revendication 9, dans lequel le processus comporte en outre les étapes ci-dessous consistant à :
recevoir un second signal ordonnant d'ajuster le volume de trafic à partir d'un second contrôleur ;
déterminer si le second contrôleur est sur un chemin entre un dispositif mettant en oeuvre ce procédé dans le réseau (400) et le second contrôleur dans le réseau (400) ; et
transmettre, lorsqu'il est déterminé que le second contrôleur est sur le chemin dans le réseau (400), le second signal vers une destination du second signal.
